# EUROPÄISCHE PATENTSCHRIFT

(11) **EP 3 786 090 B1**
(45) Veröffentlichungstag und Bekanntmachung des Hinweises auf die Patenterteilung: **06.09.2023**
(21) Anmeldenummer: 20188600.9
(22) Anmeldetag: 30.07.2020
(51) Int. Cl.: B65G 43/08, B65G 45/16

(54) **SYSTEM ZUM TRANSPORT VON TRANSPORTGUT**
SYSTEM FOR TRANSPORTING GOODS
SYSTÈME DE TRANSPORT DES MARCHANDISES

(30) Priorität: 28.08.2019 DE 102019212901
(43) Veröffentlichungstag der Anmeldung: 03.03.2021
(73) Patentinhaber: ContiTech Transportbandsysteme GmbH, 30165 Hannover (DE)
(72) Erfinder: Raffler, Patrick, 30419 Hannover (DE)
(74) Vertreter: Continental Corporation

(56) Entgegenhaltungen:
- EP-A1- 0 854 832
- JP-A- 2016 155 615
- US-A- 5 722 528
- US-A1- 2003 230 466

## Beschreibung

Die Erfindung betrifft ein System zum Transport von Transportgut. Das System umfasst mehrere Umlenkrollen, einen Riemen und einen Abstreifer. Die Umlenkrollen werden von dem Riemen jeweils zumindest teilweise umschlungen, sodass ein Riementrieb mit einem Arbeitstrum, der zum Transport des Transportguts dient, und mindestens einem Leertrum gebildet. Eine der Umlenkrollen ist mit einem Antrieb des Systems gekoppelt, sodass der Riemen in einer Transportrichtung angetrieben wird. Die Transportrichtung kann auch als Umfangsrichtung des Riemens bezeichnet und/oder ausgestaltet sein. Der Antrieb kann auch als Antriebseinheit bezeichnet und/oder ausgestaltet sein.

Der Arbeitstrum des Riemens erstreckt sich beispielsweise zwischen zwei Umlenkrollen. In der Nähe der einen Umlenkrolle kann Transportgut von oben auf den Arbeitstrum übergeben werden, sodass das an den Arbeitstrum übergebene Transportgut in Transportrichtung von dem angetriebenen Riemen zu der anderen Riemenscheibe transportiert wird. Durch das Umlenken des Riemens an der zuletzt genannten Riemenscheibe kann das Transportgut abgeworfen oder aufgrund der Trägheit des Transportguts eine automatischen Trennung von Transportgut und Riemen erfolgen.

Das Trennen von Transportgut und Riemen an einer dafür vorgesehenen Umlenkrolle kann bei Stückgut besonders gut und sicher ausgeführt werden. Dies gilt insbesondere dann, wenn das Stückgut nicht selbstständig an der Oberfläche des Riemens haftet. Insbesondere bei Schüttgut, das an der Oberfläche des Riemens haften kann, wurde in der Praxis festgestellt, dass eine selbsttätige Trennung beim Umlenken des Riemens an einer Riemenscheibe nicht zwangsläufig dazu führt, dass das Transportgut sich vollständig von dem Riemen löst. Insbesondere kann es vorkommen, dass Transportgutreste an dem Riemen haften bleiben, sodass auch der Leertrum des Riemens mit dem Transportgutrest behaftet ist. Dies ist jedoch unerwünscht. Denn der Transportgutrest wird aufgrund des Umlaufs des Riemens wieder zu der Stelle gefördert, wo neues Transportgut auf den Arbeitstrum des Riemens gegeben wird. Umso mehr Transportgutrest jedoch über den Leertrum wieder zum Arbeitstrum gefördert wird, desto geringer ist die Transportleistung des Systems. Darüber hinaus bedarf es einer Leistung, um den Transportgutrest an dem Leertrum zu fördern. Es ist deshalb wünschenswert, dass der Leertrum mit dem Transportgutrest befreit wird.

In der Praxis wird deshalb ein mechanischer Abstreifer verwendet, der außenseitig derart zu der Oberfläche des Leertrums angeordnet ist, sodass der Leertrum beim Umlauf des Riemens in Transportrichtung über den Abstreifer streift, was zu einem Abschaben des Transportgutrests von dem Leertrum führt. Aufgrund des mechanischen, unmittelbaren Kontakts zwischen dem Leertrum und dem Abstreifer entsteht eine Reibung zwischen dem Leertrum und dem Abstreifer beim Umlauf des Riemens. Dies wiederum führt zu einem Abrieb der obersten Schicht des Riemens, zu einem Verschleiß des Abstreifers und außerdem zu einer Verlustleistung, die notwendig ist, um den mechanischen Widerstand der mechanischen Reibung zwischen dem Leertrum und dem Abstreifer beim Umlauf des Riemens zu überwinden.

Die JP 2016 155615 A offenbart ein System zum Transport von Transportgut nach dem Oberbegriff des Anspruchs 1. Sie beschreibt eine Einrichtung zum Entfernen von Anhaftungen auf einer Bandoberfläche mit: einer Erfassungseinrichtung für Anhaftungen (einen Detektor für Anhaftungen auf der Bandoberfläche und eine Erfassungsvorrichtung für Anhaftungen auf der Bandoberfläche) zum Erfassen eines Anbringungszustands von Anhaftungen vor dem Entfernen der Anhaftungen; und eine Einrichtung zum Entfernen von Anhaftungen (einen Abstreifer und eine Positionssteuerungsvorrichtung für den Abstreifer) zum Empfangen von Informationen über den Anhaftungszustand der Anhaftungen, die von der Erfassungseinrichtung für Anhaftungen erfasst wurden, um die Anhaftungen zu entfernen.

Der Erfindung liegt die Aufgabe zugrunde, ein System mit einem Riementrieb zum Transport von Transportgut bereitzustellen, wobei der Leertrum des Riementriebs möglichst wenig Transportgutrest fördert und zugleich ein möglichst geringer Verschleiß des Riemens des Riementriebs gewährleistet wird. Außerdem ist es wünschenswert, dass der Riementrieb mit einer möglichst geringen Leistung bei vergleichbarer Transportleistung betrieben werden kann.

Gelöst wird die Aufgabe durch ein System mit den Merkmalen des Anspruchs 1. Vorgesehen ist also ein System zum Transport von Transportgut. Das System weist mehrere Umlenkrollen, einen Riemen, einen Abstreifer, einen Aktor, einen Sensor und eine Kontrolleinheit auf, wobei der Riemen die Umlenkrollen jeweils teilweise umschlingt, so dass ein Riementrieb mit einem Arbeitstrum, der zum Transport von Transportgut dient, und einem Leertrum gebildet ist. Mindestens eine der Umlenkrollen ist mit einem Antrieb gekoppelt, um den Riemen in einer Transportrichtung anzutreiben. Der Abstreifer ist gegenüberliegend zum Leertrum angeordnet und dabei derart mit dem Aktor gekoppelt, sodass ein Abstand zwischen dem Abstreifer und dem Leertrum mittels des Aktors feststellbar ist. Der Sensor ist derart angeordnet und ausgebildet, um an dem Leertrum haftendes Transportgut kontaktlos zu erfassen. Der Sensor ist zum Erzeugen eines Sensorsignals ausgebildet, das von dem Sensor erfasstes Transportgut repräsentiert. Der Sensor ist mit der Kontrolleinheit direkt oder indirekt gekoppelt, um das Sensorsignal an die Kontrolleinheit zu übertragen. Der Aktor ist direkt oder indirekt mit der Kontrolleinheit gekoppelt, sodass der Aktor von der Kontrolleinheit steuerbar ist. Die Kontrolleinheit ist ausgebildet und/oder konfiguriert, den Aktor basierend auf dem Sensorsignal derart zu steuern, sodass an dem Leertrum des Riemens haftendes Transportgut von dem Abstreifer abgeschabt wird.

Erfindungsgemäß ist der Abstreifer modular durch mehrere Abstreifeinheiten gebildet, die quer zu der Transportrichtung verteilt angeordnet sind und jeweils zum Abschaben von an dem Leertrum haftenden Transportgut ausgebildet sind, wobei der Aktor mit den Abstreifeinheiten derart gekoppelt ist, sodass ein Abstand zwischen jeder Abstreifeinheit und dem Leertrum mittels des Aktors individuell verstellbar ist.

Die Erfindung basiert auf dem Grundgedanken, dass der Abstreifer des Systems nur so dicht an den Leertrum heranbewegt werden muss, sodass der Abstreifer den an dem Leertrum haftenden Transportgutrest abschabt. Unter einem Abschaben kann auch ein Abstreifen oder ein Abkratzen verstanden werden. Es ist nämlich nicht immer notwendig, dass der Abstreifer ohne zeitliche Unterbrechung unter hohem Druck gegen den Leertrum drückt, während der Riemen in Transportrichtung angetrieben wird, was zu einer dauerhaft hohen Reibung zwischen dem Abstreifer und dem Leertrum führt. Dies wiederum führt zu einem hohen Abrieb der Deckschicht des Riemens und damit zu einem schnellen Verschleiß des Riemens. Denn dies ist jedoch zu vermeiden. Deshalb bietet das System die Möglichkeit, dass der Abstand zwischen dem Abstreifer und dem Leertrum mittels des Aktors verstellbar ist. Ist der Sensor in Transportrichtung hinter dem Abstreifer angeordnet, so kann die Kontrolleinheit derart konfiguriert sein, dass der Abstand zwischen dem Abstreifer und dem Leertrum verringert wird, wenn von dem Sensor Transportgut erfasst wird, insbesondere dann, wenn die Höhe des erfassten Transportguts größer als ein zugehöriger Schwellwert ist. Wird kein Transportgut von dem Sensor erfasst, kann dies bedeuten, dass der Abstand des Abstreifers zu dem Leertrum einen optimalen Abstand aufweist und/oder dass der Abstreifer einen größeren Abstand zum Leertrum aufweisen kann, ohne dass eine verschlechterte Wirkung des Abstreifens von Transportgutrest an dem Leertrum zu erwarten ist. Im ersten Fall mit dem richtig eingestellten Abstand ist es möglich, dass die Kontrolleinheit den Abstand zum Abstreifer nicht verändert. Es ist jedoch auch möglich, dass der Abstand zwischen dem Abstreifer und dem Leertrum vergrößert wird, wenn kein Transportgut erfasst wird oder wenn ein Transportgut mit einer Höhe erfasst wird, die geringer als ein vorbestimmter Minimalwert ist. Insbesondere wenn kein Transportgut erfasst wird, kann dies darauf hindeuten, dass bereits in Transportrichtung vor dem Abstreifer kein Transportgut an dem Leertrum haftet. Ist dies der Fall, bedarf es keines unmittelbaren Kontaktes zwischen dem Abstreifer und dem Leertrum. Dies verhindert eine Reibung zwischen dem Abstreifer und dem Leertrum, sodass die Abrasion der obersten Schicht des Riemens zumindest verringert wird. Als ein weiterer Effekt wird weniger Leistung benötigt, um den Riemen in Transportrichtung anzutreiben. Wenn also beispielsweise Transportgut mittels des Riemens transportiert wird, wobei das Transportgut nicht an dem Leertrum haftet, kann der Abstreifer mittels des Aktors außer Kontakt zu dem Leertrum gebracht werden, indem der Abstand zwischen dem Leertrum und dem Abstreifer erhöht wird. Ist der Sensor in Transportrichtung vor dem Abstreifer angeordnet, sodass mögliches an dem Leertrum haftendes Transportgut in Transportrichtung vor dem Abstreifer erkannt werden kann, so wird der Sensor ebenfalls kein Transportgut erkennen, sobald kein Transportgut mehr an dem Leertrum haftet. Basierend auf dem entsprechenden Sensorsignal wird deshalb die Kontrolleinheit den Abstand des Abstreifers zum Leertrum erhöhen, sodass keine Reibung mehr zwischen Abstreifer und Leertrum entsteht. Wird anderes Transportgut mittels des Riemens transportiert, das gegebenenfalls am Leertrum haftet, so wird dies ebenfalls von dem Sensor erkannt und ein entsprechendes Sensorsignal an die Kontrolleinheit übertragen. Die Kontrolleinheit wird sodann den Abstand des Abstreifers durch Steuerung des Aktors und basierend auf dem Sensorsignal verringern, um ein Abstreifen des an dem Leertrum haftenden Transportgutrests zu gewährleisten. Das an dem Leertrum haftende Transportgut wird auch als Transportgutrest bezeichnet.

Es ist auch möglich, dass der Sensor in Transportrichtung hinter dem Abstreifer angeordnet ist. Wird von dem Sensor Transportgut mit einer Höhe erkannt, die beispielsweise größer als ein vorbestimmter Schwellwert ist, so wird die Auswerteeinheit das entsprechende Sensorsignal des Sensors verwenden, um den Abstand des Abstreifers durch Steuerung des Aktuators zu verringern, was dazu führt, dass mehr Transportgut vom Leertrum abgeschabt wird. In entsprechender Weise wird der Sensor deshalb auch weniger Transportgut erfassen. Erreicht die Höhe des vom Sensor erfassten Transportguts beispielsweise den zuvor genannten Schwellwert, kann die Kontrolleinheit derart konfiguriert sein, dass der Abstand des Abstreifers gehalten wird. Der Riemen des Systems ist vorzugsweise als ein Transportriemen oder als ein Transportband ausgebildet. Das Transportband kann beispielsweise eine Breite von mehr als 20 cm, vorzugsweise mehr als 50 cm aufweisen. Das Transportband kann auch als Förderband bezeichnet sein. Sofern der Riemen als Transportband ausgebildet ist, können die Umlenkrollen als walzenförmige Umlenkrollen oder als Umlenkwalzen ausgebildet sein. Wenn im Folgenden auf den Riemen und/oder die Umlenkrollen Bezug genommen wird, sollen die entsprechenden Erläuterungen, bevorzugten Merkmale, Vorteile und/oder technischen Effekte in analoger Weise für ein Transportband bzw. eine Umlenkwalze gelten.

Der Riemen umschlingt die Umlenkrollen jeweils teilweise derart, dass ein Riementrieb mit einem Arbeitstrum gebildet ist. Dieser Riementrieb umfasst deshalb die Umlenkrollen, den Riemen und mindestens einen Antrieb, der mit einer der Umlenkrollen gekoppelt ist, um den Riemen in einer Transportrichtung anzutreiben. Der Arbeitstrum erstreckt sich zwischen zwei der Umlenkrollen. Darüber hinaus ist es vorgesehen, dass der Riemen einen Leertrum aufweist. Der Leertrum erstreckt sich ebenfalls zwischen zwei der Umlenkrollen. Der Leertrum ist jedoch nicht gleichzeitig der Arbeitstrum. Außerdem kann es vorgesehen sein, dass der Riementrieb mehrere Leertrume aufweist. Für das System ist es bevorzugt vorgesehen, dass der Abstreifer gegenüberliegend zu dem Leertrum angeordnet ist, der in Transportrichtung des Riemens nach dem Arbeitstrum folgt. So kann an dem Arbeitstrum beispielsweise zunächst ein Umschlingungsabschnitt des Riemens an einer Umlenkrolle folgen, wobei der Leertrum unmittelbar an diesen Umschlingungsabschnitt folgt, zu dem Leertrum der Abstreifer gegenüberliegend angeordnet ist.

Der Abstreifer kann beispielsweise mindestens eine Abstreiferplatte aufweisen, die zum Abschaben von Transportgut von der Außenseite des Leertrums ausgebildet ist. Der Abstreifer kann an einem Mechanismus bewegbar befestigt sein, sodass der Abstand zwischen dem Abstreifer und dem Leertrum veränderbar ist. Außerdem ist der Abstreifer mit einem Aktor des Systems gekoppelt, sodass der Abstand zwischen dem Abstreifer und dem Leertrum mittels des Aktors verstellbar ist. Mittels des Aktors kann deshalb der Abstand zwischen dem Leertrum und dem Abstreifer eingestellt werden. Der Aktor kann direkt mit dem Abstreifer gekoppelt sein oder mit dem zuvor genannten Mechanismus direkt oder in direkt gekoppelt sein, sodass der Abstand des Abstreifers zum Leertrum mittels des Aktors verstellbar ist. Der Aktor kann beispielsweise als ein elektrischer Aktor, ein hydraulischer Aktor oder ein pneumatischer Aktor ausgebildet sein. Außerdem kann der Aktor als ein elektromechanischer, elektrohydraulischer oder elektropneumatischer Aktor ausgebildet sein. Der Aktor kann außerdem derart mit dem Abstreifer gekoppelt sein, um unmittelbar gegen die Außenseite des Leertrums zu stoßen und an dieser angepresst zu werden, sodass der Abstand zwischen dem Abstreifer und der Außenseite des Leertrums zumindest im Wesentlichen Null ist. Außerdem kann der Aktor eine Kraft auf den Abstreifer ausüben, sodass der Abstreifer gegen die Außenseite des Leertrums gepresst wird. Dies kann insbesondere dann von Vorteil sein, wenn der Transportgutrest sehr stark an dem Leertrum haftet.

Der Abstand zwischen dem Abstreifer und dem Leertrum bezieht sich vorzugsweise auf den jeweils kleinsten Abstand zwischen dem Abstreifer und der Außenseite des Leertrums, die gegenüberliegend zu dem Abstreifer ist. Insbesondere kann der Abstand sich auf einen orthogonal zur Außenseite des Leertrums bezogenen Abstand zu der Vorderkante des Abstreifers beziehen, die zumindest im Wesentlichen gegen die Transportrichtung des Riemens bzw. die Transportrichtung des Riemens am Leertrum gerichtet ist.

Das System weist außerdem einen Sensor zur Erfassung von an dem Leertrum haftenden Transportgut auf. Bei dem Transportgut handelt es sich um den zuvor genannten Transportgutrest. Dieser Transportgutrest haftet an dem Leertrum und es ist wünschenswert, dass der Leertrum den Transportgutrest nicht transportiert. Der Sensor kann beispielsweise als ein optischer Sensor, als ein Ultraschallsensor oder als ein Röntgensensor ausgebildet sein. Vorzugsweise ist der Sensor in einem vorbestimmten Sensorabstand zu der Oberfläche des Leertrums angeordnet, sodass der Sensor zur Erfassung von an dem Leertrum haftenden Transportgutrest angeordnet ist. Der Sensor kann in Transportrichtung des Leertrums vor dem Abstreifer angeordnet werden. In diesem Fall kann der Sensor das an dem Leertrum haftende Transportgut erfassen, das von dem Abstreifer abzustreifen ist. Es gibt jedoch auch eine andere Möglichkeit zur Anordnung des Sensors. So kann der Sensor in Transportrichtung des Leertrums hinter dem Abstreifer angeordnet werden, sodass von dem Sensor Transportgut an dem Leertrum erfassbar ist, das möglicherweise nicht mittels des Abstreifers vom Leertrum abgeschabt wurde.

Sofern der Sensor in Transportrichtung vor dem Abstreifer angeordnet ist, kann das entsprechende Sensorsignal an die Kontrolleinheit übertragen werden, sodass diese basierend auf dem Sensorsignal den Abstand des Abstreifers zum Leertrum mittels des Aktors einstellen kann. Dazu wird der Aktor basierend auf dem Sensorsignal gesteuert. Wird von dem Sensor beispielsweise erkannt, dass kein Transportgutrest an dem Leertrum haftet, so kann der Abstand des Abstreifers durch Steuerung des Aktors erhöht werden. Hierzu kann die Kontrolleinheit entsprechend konfiguriert sein. Dies bietet den Vorteil, dass eine Reibung zwischen dem Abstreifer und dem Leertrum des Riemens verhindert wird, wenn kein Abstreifen von Transportgut notwendig ist. Dadurch werden der Abrieb des Riemens und die notwendige Leistung zum Antrieb des Riemens verringert.

Ist der Sensor in Transportrichtung hinter dem Abstreifer angeordnet, so kann mittels des Sensors, der Kontrolleinheit, des Aktors und dem Abstreifer ein geschlossener Regelkreis gebildet werden. Dieser Regelkreis kann durch Konfiguration der Kontrolleinheit derart ausgebildet sein, dass der Aktor basierend auf dem Sensorsignal des Sensors den Abstand des Abstreifers zu der Außenseite des Leertrums derart verstellt, bis von dem Sensor kein Transportgut erfasst wird oder allenfalls Transportgut mit einer zuvor bestimmten, maximalen Schwellwerthöhe. Die Kontrolleinheit kann dabei auch derart konfiguriert sein, dass der Abstand des Abstreifers zu der Außenseite des Leertrums erhöht wird, wenn kein Transportgut von dem Sensor erfasst wird oder wenn der Sensor Transportgut erfasst, dessen Höhe geringer als der zuvor genannte Schwellwert ist. Dies hat zur Folge, dass der Abstand des Abstreifers zum Leertrum erhöht wird, wenn bereits kein Transportgut in Transportrichtung vor dem Abstreifer an dem Leertrum haftet. Dadurch kann die Reibung und die notwendige Leistung zum Antrieb des Riemens deutlich verringert werden. Haftet hingegen Transportgut an dem Leertrum in Transportrichtung vor dem Abstreifer, so kann der Abstand zwischen dem Abstreifer und dem Leertrum derart mittels der Kontrolleinheit durch Steuerung des Aktors eingestellt werden, dass von dem Sensor, der in Transportrichtung hinter dem Abstreifer angeordnet ist, kein Transportgut oder allenfalls Transportgut mit einer Höhe erfasst wird, die geringer als der Schwellwert ist.

Der Sensor ist direkt oder indirekt mit der Kontrolleinheit gekoppelt, um das Sensorsignal des Sensors an die Kontrolleinheit zu übertragen. Der Sensor und die Kontrolleinheit können beispielsweise integral ausgebildet sein. Es ist jedoch auch möglich, dass der Sensor und die Kontrolleinheit als unterschiedliche Einheiten ausgebildet sind. In diesem Fall kann der Sensor über eine Signalleitung mit der Kontrolleinheit gekoppelt sein, wobei das Sensorsignal über die Signalleitung an die Kontrolleinheit übertragbar ist. Zwischen dem Sensor und der Kontrolleinheit kann jedoch auch eine andere Signalverbindung bestehen, die zur Übertragung des Sensorsignals ausgebildet ist. So kann der Sensor beispielsweise über eine Funkverbindung mit der Kontrolleinheit gekoppelt sein, um das Sensorsignal von dem Sensor an die Kontrolleinheit zu übertragen.

Außerdem ist der Aktor direkt oder indirekt mit der Kontrolleinheit gekoppelt, sodass der Aktor von der Kontrolleinheit gesteuert werden kann. Die Kontrolleinheit kann beispielsweise über Steuerleitungen mit dem Aktor verbunden werden, sodass der Aktor über Steuersignale der Kontrolleinheit gesteuert wird, die über die Steuerleitungen übertragen werden. Die Steuersignale können Leistungssignale sein oder sie können Signale repräsentieren, die eine geforderte Leistung und/oder Antriebsbewegung des Aktors repräsentieren. Die Steuersignale müssen also nicht zwangsläufig Leistungssignale sein. Insbesondere in diesem Fall ist es möglich, dass die Steuersignale über eine Funkverbindung zu dem Aktor übertragen werden, sodass die Kopplung des Aktors und der Kontrolleinheit über eine Funkverbindung stattfinden kann. Bevorzugt ist jedoch eine leitungsgebundene Signalverbindung zwischen dem Aktor und der Kontrolleinheit.

Wird der Aktor von der Kontrolleinheit angesteuert, so verursacht dies ein Verstellen des Abstands des Abstreifers zu der Oberseite des Leertrums. Da das Sensorsignal an die Kontrolleinheit übertragen wird, liegen der Kontrolleinheit die Informationen vor, ob Transportgut in Transportrichtung vor und/oder hinter dem Abstreifer an dem Leertrum haftet. Ist dies der Fall, kann die Kontrolleinheit den Aktor derart ansteuern, sodass der Abstand zwischen Abstreifer und Leertrum verringert wird, bis das Sensorsignal repräsentiert, dass kein Transportgut mehr an dem Leertrum haftet oder das Transportgut allenfalls eine Höhe aufweist, die kleiner als ein vorbestimmter Schwellwert ist. Es ist deshalb vorgesehen, dass die Kontrolleinheit dazu ausgebildet und/oder konfiguriert ist, den Aktor basierend auf dem Sensorsignal derart zu steuern, sodass an dem Leertrum des Riemens haftenden Transportgut von dem Abstreifer zumindest teilweise oder vollständig abgeschabt wird.

Eine vorteilhafte Ausgestaltung des Systems zeichnet sich dadurch aus, dass der Sensor derart angeordnet ist, sodass der Sensor an dem Leertrum haftendes Transportgut in Transportrichtung vor dem Abstreifer erfasst. So kann der Sensor beispielsweise in Transportrichtung vor dem Abstreifer über dem Leertrum angeordnet sein, sodass der Sensor an dem Leertrum haftendes Transportgut erfassen kann, das in Transportrichtung vor dem Abstreifer mittels des Riemens bewegt wird. Der Sensor kann das an dem Leertrum haftende Transportgut deshalb bereits erfassen, bevor dieses den Abstreifer erreicht. Dadurch kann eine besonders schnelle Verstellung des Abstands des Abstreifers zum Leertrum mittels Steuerung des Aktors durch die Kontrolleinheit ausgeführt werden.

Eine weitere vorteilhafte Ausgestaltung des Systems zeichnet sich dadurch aus, dass der Sensor derart angeordnet ist, sodass der Sensor an dem Leertrum haftendes Transportgut in Transportrichtung hinter dem Abstreifer erfasst. Dies kann beispielsweise auftreten, wenn der Abstand zwischen dem Abstreifer und dem Leertrum nicht klein genug ist. Das den Abstreifer in Transportrichtung passierende Transportgut wird sodann von dem Sensor erfasst. Ist dies der Fall, wird ein entsprechendes Sensorsignal an die Kontrolleinheit gesendet, die basierend auf dem Sensorsignal den Aktor steuert, sodass der Abstand zwischen dem Abstreifer und dem Leertrum verringert wird, bis kein Transportgut den Abstreifer mehr passiert oder bis das den Abstreifer passierende Transportgut allenfalls eine Höhe aufweist, die vorzugsweise kleiner als eine vorbestimmte Maximalhöhe ist. Der Sensor kann dazu beispielsweise in Transportrichtung hinter dem Abstreifer angeordnet sein, sodass der Sensor das an dem Leertrum möglicherweise haftende Transportgut in Transportrichtung hinter dem Abstreifer erfassen kann. Der Sensor kann zur Erfassung einer Höhe des Transportguts auf dem Leertrum ausgebildet und/oder angeordnet sein. Diese Ausgestaltung bietet die Möglichkeit, dass der Abstand durch das Steuern des Aktors und basierend auf dem Sensorsignal besonders präzise angepasst werden kann.

Eine weitere vorteilhafte Ausgestaltung des Systems zeichnet sich dadurch aus, dass der Sensor als ein optischer Sensor, als ein Ultraschallsensor oder als ein Röntgensensor ausgebildet ist. Weist das System mehrere Sensoren auf, kann jeder der Sensoren als ein optischer Sensor, ein Ultraschallsensor oder als ein Röntgensensor ausgebildet sein. Auch unterschiedliche Sensortypen sind für die Sensoren des Systems möglich. Die Sensoren sind jedoch nicht auf die zuvor genannten Sensortypen bzw. Sensortechnologien eingeschränkt. Es können auch andere Sensortypen und/oder Erfassungstechnologien für den jeweiligen Sensor verwendet werden.

Eine weitere vorteilhafte Ausgestaltung des Systems zeichnet sich dadurch aus, dass die Kontrolleinheit ausgebildet ist, den Abstand des Abstreifers zum Leertrum durch Steuern des Aktors und basierend auf dem Sensorsignal derart auf einen vorbestimmten Referenzabstand zu regeln, sodass an dem Leertrum des Riemens haftendes Transportgut bis auf eine Abstandshöhe des Transportguts auf dem Riemen von dem Abstreifer abgeschabt wird, wobei die Abstandshöhe durch den geregelten Abstand des Abstreifers vom Leertrum bestimmt ist. Das Sensorsignal kann die Höhe des vom Sensor erfassten Transportguts repräsentieren. Der Referenzabstand kann beispielsweise Null sein oder einen anderen vorbestimmten Wert haben. Der vorbestimmte Referenzabstand kann beispielsweise in der Praxis von einer Korngröße des Transportguts abhängen. Wird beispielsweise Schüttmaterial mit einer Korngröße von mindestens 2 mm mittels des Systems transportiert, so kann der Referenzabstand durch einen Wert von weniger als 2 mm vorbestimmt sein. Dies ist ausreichend, um möglicherweise an dem Leertrum haftendes Transportgut mittels des Abstreifers abzuschaben.

Eine weitere vorteilhafte Ausgestaltung des Systems zeichnet sich dadurch aus, dass der Abstreifer von der Kontrolleinheit derart basierend auf dem Sensorsignal gesteuert wird, dass der Abstand des Abstreifers vom Leertrum nicht weniger als einen vorbestimmten Mindestabstand beträgt. Der Mindestabstand kann beispielsweise 1 mm, 2 mm oder 5 mm betragen. Der Mindestabstand kann jedoch auch kleiner als 1 mm oder größer als 5 mm gewählt werden. Die Berücksichtigung des Mindestabstands bietet den Vorteil, dass keine Reibung zwischen dem Abstreifer und der äußeren Schicht des Riemens auftritt. Dadurch kann der Verschleiß des Riemens verringert werden. Sofern kein Mindestabstand vorgesehen ist, kann der Abstreifer auch in einen unmittelbaren Kontakt zu dem Leertrum gebracht werden. Hierzu kann der Aktor und/oder die Kontrolleinheit entsprechend ausgebildet sein. Außerdem kann dadurch gewährleistet werden, dass der Leertrum besonders vollständig mittels des Abstreifers von dem Transportgutrest befreit wird.

Eine weitere vorteilhafte Ausgestaltung des Systems zeichnet sich dadurch aus, dass die Kontrolleinheit basierend auf dem Sensorsignal zur Erkennung eines zumindest im Wesentlichen sauberen Leertrums ausgebildet ist, wenn an dem Leertrum kein Transportgut haftet oder wenn Transportgut mit einer Höhe von weniger als einer vorbestimmten Maximalhöhe an dem Leertrum haftet. Die Kontrolleinheit ist dabei vorzugsweise ausgebildet, den Aktor derart zu steuern, sodass der Abstreifer mindestens einen vorbestimmten Leerlaufabstand zu dem Leertrum aufweist, wenn von der Kontrolleinheit das zumindest im Wesentlichen saubere Leertrum erkannt wird. Wie bereits zuvor erläutert, kann das Sensorsignal die Höhe des erfassten Transportguts repräsentieren. Wenn der Sensor in Transportrichtung vor dem Abstreifer angeordnet ist, so kann das Sensorsignal einen Leertrum ohne Transportgut oder mit Transportgut repräsentieren. Repräsentiert das Sensorsignal den Leertrum ohne Transportgut, so kann die Kontrolleinheit basierend auf dem Sensorsignal den Leertrum als sauber erkennen. Aber selbst wenn Transportgut an dem Leertrum haftet und dies von dem Sensor erkannt wird, sodass das Sensorsignal Transportgut auf dem Leertrum repräsentiert, kann das Sensorsignal auch die Höhe des erkannten Transportguts repräsentieren. Basierend auf diesem Sensorsignal kann die Kontrolleinheit erkennen, ob der Leertrum dennoch als sauber verstanden wird und somit als ein sauberer Leertrum erkannt wird, nämlich dann, wenn die Höhe des von dem Sensor erkannten Transportguts weniger als die vorbestimmte Maximalhöhe ist. Die vorbestimmte Maximalhöhe kann in Abhängigkeit von dem zu transportierenden Transportgut vorbestimmt sein. Alternativ oder ergänzend kann die Maximalhöhe durch andere Bedingungen und/oder durch Erfahrungswerte vorbestimmt sein. So kann die Maximalhöhe beispielsweise 0,5 mm, 1 mm oder 2 mm sein. Andere Werte für die Maximalhöhe, die insbesondere kleiner als 0,5 mm oder größer als 2 mm sind, sind ebenfalls möglich.

Wenn der Leertrum von der Kontrolleinheit als sauber erkannt wird, hat es sich als vorteilhaft herausgestellt, wenn der Abstreifer zumindest einen Abstand zum Leertrum aufweist, der den Leerlaufabstand beträgt oder weiter von dem Leertrum beabstandet ist. In diesem Fall wird gewährleistet, dass keine Reibung zwischen dem Abstreifer und dem Leertrum auftritt. Dadurch kann die Abnutzung des Riemens verringert werden und außerdem ist sodann die Leistung geringer, die zum Antrieb des Riemens benötigt wird.

Eine weitere vorteilhafte Ausgestaltung des Systems zeichnet sich dadurch aus, dass der vorbestimmte Leerlaufabstand mindestens 2 mm, mindestens 4 mm, mindestens 5 mm oder mindestens 10 mm beträgt. Der Leerlaufabstand kann jedoch auch größer als 10 mm, insbesondere deutlich größer als 10 mm sein. Dies ist beispielsweise dann notwendig, wenn der Leertrum sehr lang ist und zum Schwanken in einer Achse neigt, die senkrecht zur Außenfläche und/oder Transportrichtung des Leertrums ist. Durch die Größe des vorbestimmten Leerlaufabstands kann somit effektiv verhindert werden, dass der Abstreifer versehentlich mit dem Leertrum in Kontakt kommt, wenn zuvor bereits erkannt wurde, dass der Leertrum sauber ist.

Erfindungsgemäß ist der Abstreifer modular durch mehrere Abstreifeinheiten gebildet. Die Abstreifeinheiten sind quer zu der Transportrichtung verteilt angeordnet und jeweils zum Abschaben von an dem Leertrum haftenden Transportgut ausgebildet. Die modulare Ausgestaltung des Abstreifers hat sich als vorteilhaft erwiesen, insbesondere dann, wenn der Riemen als ein Transportband ausgebildet ist, das eine sehr große Breite aufweist. Ist das Transportband beispielsweise 1,20 m breit, so kann der Abstreifer beispielsweise drei Abstreifeinheiten aufweisen, die quer zur Transportrichtung verteilt nebeneinander bzw. in einer Richtung quer zur Transportrichtung hintereinander angeordnet sind. Die Abstreifeinheiten können fluchtend in der entsprechenden Querrichtung angeordnet sein. Dadurch wird gewährleistet, dass das Transportband über die gesamte Breite von dem möglicherweise an dem Leertrum haftenden Transportgut befreit wird. Denn jede der Abstreifeinheiten ist zum Abschaben von an dem Leertrum haftenden Transportgut ausgebildet. Vorzugsweise sind die Abstreifeinheiten jeweils gleich oder zumindest nach einer gleichen Form und/oder Struktur ausgebildet. Die Abstreifeinheiten können mit einer Halterung und/oder einem Haltemechanismus gehalten sein, sodass der Abstand jeder Abstreifeinheit zu dem Leertrum veränderbar ist. Der Abstand des Abstreifers ist in diesem Fall vorzugsweise der mittlere Abstand der Abstände der mehreren Abstreifeinheiten. Der Abstreifer mit den mehreren Abstreifeinheiten kann auch als Abstreifvorrichtung bezeichnet sein, die die mehreren Abstreifeinheiten aufweist. Die Verwendung von mehreren Abstreifeinheiten kann vorteilhaft sein, wenn der Leertrum des Riemens, insbesondere des Transportbands, gewölbt ist. Denn in diesem Fall können die Abstreifeinheiten an die jeweilige Wölbung des Leertrums angepasst werden, was wiederum ein besonders effektives Abstreifen von an dem Leertrum haftenden Transportgut ermöglicht. So können beispielsweise die beiden außen angeordneten Abstreifeinheiten jeweils in einem schrägen Winkel zu einer mittleren Abstreifeinheit angeordnet sein, was das Abstreifen eines gewölbten Leetrums ermöglicht.

Eine vorteilhafte Ausgestaltung des Systems zeichnet sich dadurch aus, dass in Querrichtung des Leertrums benachbarte Abstreifeinheiten unmittelbar aneinandergrenzen oder jeweils einen Querabstand von weniger als 2 cm aufweisen. Die Querabstände sind besonders bevorzugt kleiner als 1 cm oder besonders bevorzugt kleiner als 5 mm. Als besonders bevorzugt ist es jedoch vorgesehen, dass die Abstreifeinheiten unmittelbar aneinandergrenzen und somit in einer Reihe hintereinander angeordnet sind und dabei die Stirnseiten der Abstreifeinheiten unmittelbar Kontakt zueinander aufweisen. Dadurch kann verhindert werden, dass ein Teil von an dem Leertrum haftenden Transportgut nicht von dem Leertrum mittels der Abstreifeinheiten abgeschabt wird. Der mögliche Querabstand kann von einer Korngröße des zu transportierenden Transportguts abhängen. Je größer die Korngröße ist, desto größer kann der Querabstand vorbestimmt sein.

Eine weitere vorteilhafte Ausgestaltung des Systems zeichnet sich dadurch aus, dass jede Abstreifeinheit als eine pflugförmige oder V-förmige Abstreifeinheit ausgebildet ist. Andere Formen der Abstreifeinheiten sind ebenfalls möglich. So können die Abstreifeinheiten beispielsweise derart ausgebildet sein, dass die Anordnung der Abstreifeinheiten eine V-Form für den gesamten Abstreifer bildet. Sofern der Abstreifer einteilig ausgestaltet ist, was möglich ist, so kann der Abstreifer pflugförmig oder V-förmig ausgestaltet sein. Der Abstreifer kann aber auch gerade oder plattenförmig ausgestaltet sein. Entsprechendes kann für jede der Abstreifeinheiten ebenfalls gelten.

Erfindungsgemäß ist der Aktor mit den Abstreifeinheiten derart gekoppelt, sodass ein Abstand zwischen jeder Abstreifeinheit und dem Leertrum mittels des Aktors individuell verstellbar ist. So kann der Aktor beispielsweise mehrere Aktorstränge aufweisen, die jeweils direkt oder indirekt mit einem der Abstreifeinheiten gekoppelt sind, sodass ein Abstand zwischen jeder Abstreifeinheit und dem Leertrum mittels des Aktors und der zugehörigen Aktortränge individuell einstellbar ist.

Eine weitere vorteilhafte Ausgestaltung des Systems zeichnet sich dadurch aus, dass der Sensor zur Erfassung von an dem Leertrum haftenden Transportgut über die gesamte Breite des Leertrums ausgebildet und/oder angeordnet ist. Der Sensor kann also beispielsweise erfassen, ob an der linken oder rechten Seite des Leertrums Transportgut an dem Leertrum haftet. Der Sensor kann eine vorbestimmte Auflösung aufweisen, die es ermöglicht, dass die Erfassung des an dem Leertrum möglicherweise haftenden Transportguts in eine Mehrzahl von Erfassungssegmente geteilt ist, die in Querrichtung in einer Reihe hintereinander verteilt angeordnet sind. Der Sensor kann als Zeilensensor und/oder Matrixsensor mit einer Mehrzahl von Sensorzellen ausgebildet sein. Dadurch kann eine entsprechende Auflösung in Bezug auf die Erfassung des an dem Leertrum möglicherweise haftenden Transportguts durch den Sensor gewährleistet werden. Das Sensorsignal kann die Höhe des erfassten Transportguts für jedes Erfassungssegment und/oder jede Sensorzelle repräsentieren. Dadurch kann gewährleistet werden, dass eine besonders genaue Verstellung des Abstreifers mittels der Kontrolleinheit und basierend auf dem Sensorsignal möglich ist.

Eine vorteilhafte Ausgestaltung des Systems zeichnet sich dadurch aus, dass der Aktor für jede Abstreifeinheit eine zugehörige Aktoreinheit aufweist, die jeweils mit der zugehörigen Abstreifeinheit derart gekoppelt ist, sodass der Abstand jeder Abstreifeinheit vom Leertrum mittels der zugehörigen Aktoreinheit verstellbar ist. Der Aktor kann deshalb auch als Aktorvorrichtung oder als Aktorsystem bezeichnet sein. Die mehreren Abstreifeinheiten können individuell den Abstand der zugehörigen Abstreifeinheit zum Leertrum einstellen. Die Kontrolleinheit ist ausgebildet, den Aktor und somit auch die zugehörigen Aktoreinheiten basierend auf dem Sensorsignal zu steuern. Das Sensorsignal ist vorzugsweise von einem Sensor erzeugt, der ausgebildet und/oder angeordnet ist, an dem Leertrum haftendes Transportgut über die gesamte Breite des Leertrums mit einer vorbestimmten Auflösung in Querrichtung zu erfassen. Das Sensorsignal kann somit die Höhe des möglicherweise an dem Leertrum haftenden Transportguts in Transportrichtung vor jedem der Mehrzahl von Abstreifeinheiten individuell repräsentieren. Deshalb kann die Kontrolleinheit auch derart ausgebildet sein, die Aktoreinheiten basierend auf dem Sensorsignal derart zu steuern, sodass an dem Leertrum des Riemens haftendes Transportgut von den Abstreifeinheiten abgeschabt wird.

Eine vorteilhafte Ausgestaltung des Systems zeichnet sich dadurch aus, dass die Kontrolleinheit ausgebildet ist, die Aktoreinheiten des Aktors basierend auf dem Sensorsignal derart zu steuern, sodass an dem Leertrum des Riemens haftendes Transportgut bis auf eine vorbestimmte Höhe des Transportguts auf dem Riemen von den Abstreifeinheiten abgeschabt wird. Die vorbestimmte Höhe des Transportguts kann für jeden Querabschnitt des Riemens gelten, und somit als Vorgabe für die Einstellung des Abstands von jeder Abstreifeinheit zum Leertrum repräsentieren, die durch ein entsprechendes Steuern der zugehörigen Aktoreinheit basierend auf dem Sensorsignal ausgeführt werden kann. Hierzu kann die Kontrolleinheit entsprechend ausgebildet sein.

Eine weitere vorteilhafte Ausgestaltung des Systems zeichnet sich dadurch aus, dass die Kontrolleinheit ausgebildet ist, den Abstand jeder Abstreifeinheit durch Steuern der Aktoreinheiten und basierend auf dem Sensorsignal jeweils derart auf einen vorbestimmten Referenzabstand zu regeln, sodass an dem Leertrum des Riemens haftendes Transportgut bis auf eine Abschabhöhe des Transportguts auf dem Riemen von den Abstreifeinheiten abgeschabt wird, wobei die Abschabhöhe durch den geregelten Abstand der Abstreifeinheiten bestimmt ist. Diese Ausgestaltung des Systems bietet den Vorteil, dass an dem Leertrum haftendes Transportgut mittels der Abstreifeinheiten effektiv abgeschabt wird und zugleich eine Reibung zwischen den Abstreifeinheiten und dem Leertrum verhindert oder minimiert wird, sodass ein Verschleiß des Riemens verringert werden kann und zugleich die Leistung minimiert werden kann, die zum Antrieb des Riemens notwendig ist.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Figur 1: zeigt eine vorteilhafte Ausgestaltung des Systems 2 in einer schematischen Seitenansicht.
- Figur 2: zeigt die Ausgestaltung des Systems 2 mit einem geringeren Abstand des Abstreifers 12 zum Leertrum 24.

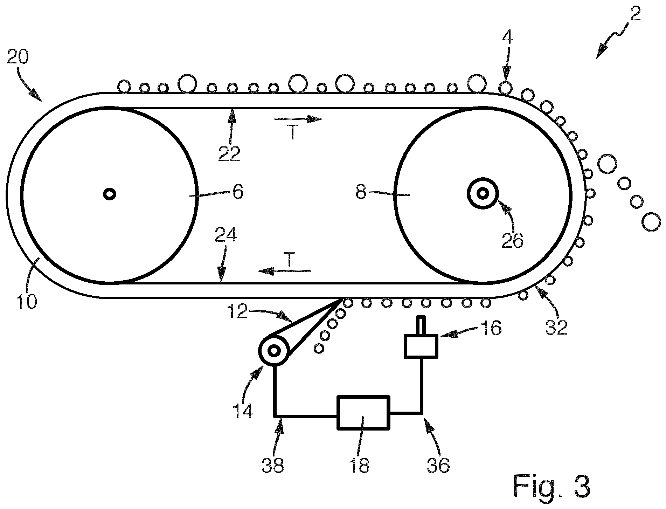

- Figur 3: zeigt eine weitere vorteilhafte Ausgestaltung des Systems 2 in einer schematischen Seitenansicht
- Figur 4: zeigt eine weitere vorteilhafte Ausgestaltung des Systems 2 in einer schematischen Seitenansicht.
- Figur 5: zeigt eine Draufsicht auf den Leertrum 24, den Abstreifer 12 sowie den Aktor 14 einer weiteren vorteilhaften Ausgestaltung des Systems 2.

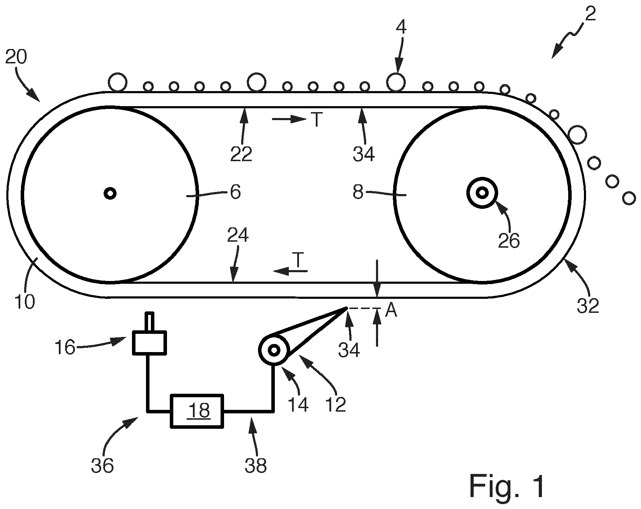

In der Figur 1 ist eine vorteilhafte Ausgestaltung des Systems 2 dargestellt. Das System 2 dient zum Transport von Transportgut 4. Das Transportgut 4 ist vorzugsweise Schüttgut. Das System 2 weist mehrere Umlenkrollen 6, 8, einen Riemen 10, einen Abstreifer 12, einen Aktor 14, einen Sensor 16 und eine Kontrolleinheit 18 auf. In der in Figur 1 dargestellten Ausgestaltungsvariante des Systems 2 umfasst das System 2 eine erste Umlenkrolle 6 und eine zweite Umlenkrolle 8. Der Riemen 10 ist vorzugsweise als ein ringförmig geschlossenes Transportband ausgebildet. So kann der Riemen 10 beispielsweise als ein sogenanntes Förderband ausgebildet sein. In diesem Fall kann das System 2 zum Transport von Schüttgut, wie Sand mit unterschiedlichen Korngrößen, Schotter oder dem Abtrag aus einer Mine ausgebildet sein. Jede der Umlenkrollen 6, 8 wird von dem Riemen 10 teilweise umschlungen. Dadurch bildet sich ein Riementrieb 20 mit einem Arbeitstrum 22 und einem Leertrum 24. Mindestens eine der beiden Umlenkrollen 6, 8 ist mit einem Antrieb 26 gekoppelt, der zum Antreiben des Riemens 10 in Transportrichtung T ausgebildet ist. Der Antrieb 26 kann auch als Antriebseinheit bezeichnet sein. Die Transportrichtung T ist dabei nicht auf eine einzige geometrische Richtung beschränkt. Vielmehr ist die Transportrichtung T diejenige, in der sich der Riemen 10 jeweils durch den Antrieb 26 angetrieben bewegt. So ist die Transportrichtung T des Arbeitstrums 22 des Riemens 10 bei der in Figur 1 beispielhaft dargestellten Ausgestaltung des Systems 2 von der linken Umlenkrolle 6 zu der rechten Umlenkrolle 8. Der Arbeitstrum 22 schließt also an einen Umschlingungsbereich an, mit dem der Riemen 10 an der linken Umlenkrolle 6 anliegt und erstreckt sich bis zu einem Umschlingungsbereich, mit dem der Riemen 10 an der rechten Umlenkrolle 8 anliegt. Mit dem Arbeitstrum 22 kann das Transportgut 4 in Transportrichtung T transportiert werden. Erreicht das Transportgut 4 den Umschlingungsbereich, mit dem der Riemen 10 an der rechten Umlenkrolle 8 anliegt, so tritt oftmals der Fall ein, dass das Transportgut 4 sich selbstständig von der Außenseite 32 des Riemens 10 löst und damit eine Trennung von dem Transportgut 4 von dem Riemen 10 stattfindet. Durch den Antrieb 26 an der rechten Umlenkrolle 8 wird der Riemen 10 umlaufend angetrieben. Von dem Umschlingungsabschnitt, mit dem der Riemen 10 an der rechten Umlenkrolle 8 anliegt, bis zu dem Umschlingungsabschnitt, mit dem der Riemen 10 an der linken Umlenkrolle 6 anliegt, erstreckt sich der Leertrum 24. Der Leertrum 24 wird ebenfalls in Transportrichtung T bewegt. Die Transportrichtung T folgt also dem Riemen 10. Die Transportrichtung T kann deshalb also auch als Umlaufrichtung des Riemens 10 bezeichnet sein.

Sofern das Transportgut 4 beim Umlenken an der rechten Umlenkrolle 8 eine vollständige Trennung von dem Riemen 10 erfährt, wird der Riemen 10 in Richtung des Leertrums 24 weiterbewegt, wobei hier sodann, wie in Figur 1 beispielhaft dargestellt, kein Transportgut 4 entlang des Leertrums 24 gefördert wird.

Der ebenfalls in Figur 1 schematisch dargestellte Abstreifer 12 muss deshalb nicht eingesetzt werden, um an der Außenseite 32 des Riemens 10 haftendes, restliches Transportgut 4, das den Leertrum 24 erreicht, von der Außenseite 32 des Leertrums 24 abzuschaben. Der Abstreifer 12 ist deshalb in einem Abstand A (größer Null) zu der Außenseite 32 des Leertrums 24 angeordnet. Der Abstreifer 12 ist grundsätzlich gegenüberliegend zu dem Leertrum 24 angeordnet und dabei außerdem mit dem Aktor 14 des Systems 2 derart gekoppelt, sodass der Abstand A zwischen dem Abstreifer 12 und dem Leertrum 24 mittels des Aktors 14 verstellbar ist. So kann der Aktor 14 beispielsweise derart ausgebildet sein, um den Abstreifer 12 um eine Achse des Aktors 14 zu verschwenken, sodass der Abstand A zwischen dem Abstreifer 12 und dem Leertrum 24 verringert oder vergrößert wird. Der Abstand A zwischen dem Abstreifer 12 und dem Leertrum 24 bezeiht sich vorzugsweise auf den kleinsten Abstand zwischen der Außenseite 32 des Leertrums 24 und der Spitze 34 des Abstreifers 12, die den geringsten Abstand zu der Außenseite 32 des Leertrums 24 aufweist.

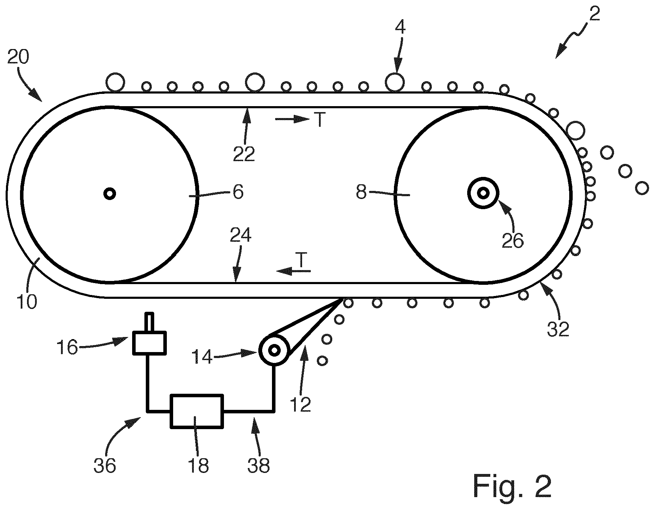

In der Praxis kann es vorkommen, dass das Transportgut 4 an der Außenseite 32 des Riemens 10 haftet. Dieser Fall ist beispielhaft bei dem System 2 in Figur 2 dargestellt. Zunächst wird das Transportgut 4 in der Nähe von der linken Umlenkrolle 6 auf die Außenseite 32 des Arbeitstrums 22 gegeben und wird in Transportrichtung T entlang des Arbeitstrums 22 gefördert. Ein Großteil des geförderten Transportguts 4 wird dann am Umschlingungsabschnitt, der an der rechten Umlenkrolle 8 anliegt, durch die Umlenkung des Riemens 10 von dem Riemen 10 getrennt. Es kann jedoch ein verbleibender Teil an der Außenseite 32 des Riemens 10 haften bleiben, der somit zu dem Leertrum 24 gelangt. Um zu verhindern, dass der zu dem Leertrum 24 gelangte, restliche Teil des Transportguts 4, der auch als Transportgutrest bezeichnet wird, mit dem Riemen 10 umlaufend gefördert wird, ist es vorgesehen, dass der Abstreifer 12 mittels des Aktors 14 derart verstellt wird, sodass der Abstand A zwischen der Außenseite 32 des Leertrums 24 und dem Abstreifer 12, insbesondere der Spitze 34 des Abstreifers 12, verringert wird, was sodann zu dem Abschaben des Transportgutrests von der Außenseite 32 des Leertrums 24 führt.

Wird in der Ausgangsstellung, wie sie in der Figur 1 des Systems 2 beispielhaft dargestellt ist, ein Transportgutrest mit dem Riemen 10 zu dem Leertrum 24 gefördert, so wird dieser Transportgutrest von dem Sensor 16 des Systems 2 kontaktlos erfasst. Der Sensor 16 ist beispielsweise ein optischer Sensor, der mittels Licht, insbesondere mittels Infrarotlicht, den Transportgutrest an der Außenseite 32 des Leertrums 24 und/oder dessen Höhe über der Außenseite 32 des Leertrums 24 erfasst. Der Sensor 16 ist über eine Signalleitung 36 mit der Kontrolleinheit 18 des Systems 2 gekoppelt. Der Sensor 16 erzeugt ein Sensorsignal, das den von dem Sensor 16 erfassten Transportgutrest repräsentiert. Außerdem ist der Sensor 16 ausgebildet, das Sensorsignal über die Sensorleitung 36 an die Kontrolleinheit 18 zu übertragen. Deshalb ist der Sensor 16 auch mit der Kontrolleinheit 18 direkt oder indirekt gekoppelt, um das Sensorsignal an die Kontrolleinheit 18 zu übertragen.

Der Kontrolleinheit 18 wird also über das Sensorsignal die Information zur Verfügung gestellt, ob ein Transportgutrest an der Außenseite 32 des Leertrums 24 gefördert wird und gegebenenfalls welche Höhe der erfasste Transportgutrest hat.

Die Kontrolleinheit 18 ist über eine Steuerleitung 38 mit dem Aktor 14 verbunden. Die Kontrolleinheit 18 ist insbesondere über die Steuerleitung 38 derart mit dem Aktor 14 gekoppelt, sodass der Aktor 14 von der Kontrolleinheit 18 steuerbar ist.

So kann die Kontrolleinheit 18 über die Steuerleitung 38 Kontrollsignale an den Aktor 14 übertragen, sodass der Aktor 14 entsprechend den übertragenen Sensorsignalen von der Kontrolleinheit 18 gesteuert wird. So kann die Kontrolleinheit 18 den Aktor 14 über die Steuersignale beispielsweise derart steuern, dass der Aktor 14 eine von der Kontrolleinheit 18 gesteuerte Rotationsbewegung ausführt, die wiederum zu einem Verschwenken des Abstreifers 12 führt. Dadurch kann der Abstand A zwischen der Spitze 34 des Abstreifers 12 und der Außenseite 32 des Leertrums 24 vergrößert oder verkleinert werden.

Bezugnehmend auf das zuvor erläuterte Beispiel wird ein Transportgutrest von dem Sensor 16 erfasst und ein entsprechendes Sensorsignal über die Sensorleitung 36 an die Kontrolleinheit 18 übertragen. Basierend auf dem Sensorsignal wird die Kontrolleinheit 18 den Aktor 14 durch Steuersignale derart steuern, sodass der Abstand A zwischen der Spitze 34 des Abstreifers 12 und der Außenseite 32 des Leertrums 24 verkleinert wird und dadurch der an dem Leertrum 24 des Riemens 10 haftende Transportgutrest von dem Abstreifer 12 abgeschabt wird. Dies ist beispielhaft in der Figur 2 schematisch dargestellt. Es kann jedoch auch in Bezugnahme auf die Figuren 1 und 2 ein Fall auftreten, in dem zunächst ein Transportgutrest zum Leertrum 24 gefördert wird und beispielsweise nach einer gewissen Zeit durch einen Wechsel das Transportgut 4 kein Transportgutrest mehr an der Außenseite 32 des Riemens 10 haftet, zumindest nicht mehr so stark, sodass das Transportgut 4 durch das Umlenken an der zweiten Umlenkrolle 8 vollständig abgetrennt wird. Dies wäre der Übergang von dem System 2, wie es beispielhaft in der Figur 2 dargestellt ist, zu dem Fall, wie es in der Figur 1 dargestellt wird. Um zu verhindern, dass der Abstreifer 12 weiterhin an der Außenseite 32 des Leertrums 24 reibt und dadurch die Oberfläche des Riemens 10 abnutzt, ist es bevorzugt vorgesehen, dass die Kontrolleinheit 18 den Aktor 14 derart steuert, sodass der Abstand A des Abstreifers 12 zu der Außenseite 32 des Leertrums 24 wieder erhöht wird, wenn kein Transportgutrest bis zu dem Leertrum 24 gefördert wird. Dies kann ebenfalls von dem Sensor 16 erkannt werden. Wird also beispielsweise von dem Sensor 16 kein Transportgutrest erkannt, deutet dies auf den Fall hin, dass der Leertrum 24 sauber ist und deshalb kein Abstreifen von einem Transportgutrest mittels des Abstreifers 12 notwendig ist. Eine vorteilhafte Ausgestaltung des Systems 2 zeichnet sich deshalb dadurch aus, dass die Kontrolleinheit 18 basierend auf dem Sensorsignal zur Erkennung eines zumindest im Wesentlichen sauberen Leertrums 24 ausgebildet ist, wenn an dem Leertrum 24 kein Transportgut 4 haftet oder wenn allenfalls Transportgut 4 mit einer Höhe von weniger als der vorbestimmten Maximalhöhe an dem Leertrum 24 haftet. Außerdem ist die Kontrolleinheit 18 bevorzugt derart ausgebildet, den Aktor 14 derart zu steuern, sodass der Abstreifer 12, insbesondere dessen Spitze 34, mindestens einen vorbestimmten Leerlaufabstand zu dem Leertrum 24 aufweist, wenn von der Kontrolleinheit 18 basierend auf dem Sensorsignal zumindest im Wesentlichen ein sauberer Leertrum 24 erkannt wird. Der Leerlaufabstand kann beispielsweise mindestens 10 mm oder mindestens 20 mm betragen. Der Leerlaufabstand kann auch von der Länge des Leertrums 24 abhängen. Ist der Leertrum 24 besonders lang, kann der Leerlaufabstand sogar noch größer gewählt werden. Bei einer geringen Länge des Leertrums 24 kann auch ein kleinerer Leerlaufabstand gewählt werden. Indem die Spitze 34 des Abstreifers 12 einen ausreichend großen Abstand erreicht, kann verhindert werden, dass der Abstreifer 12 versehentlich an der Außenseite 32 des Leertrums 24 reibt, wenn kein Abstreifen von Transportgutrest notwendig ist. Vielmehr kann der Leertrum 24 in diesem Fall reibungsfrei an dem Abstreifer 12 vorbeigeführt werden, was die Abrasion an der Außenseite 32 des Leertrums 24 verringert, die Lebenszeit des Riemens 10 erhöht und gleichzeitig die Leistung verringert, die der Antrieb 26 benötigt, um den Riemen 10 in Transportrichtung T anzutreiben.

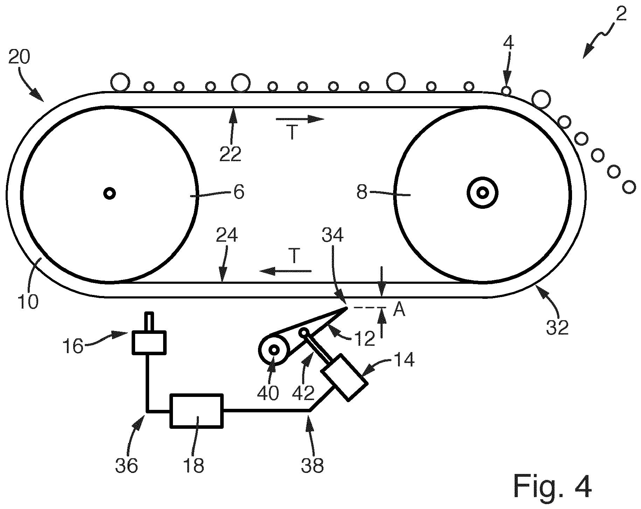

In der Figur 4 ist eine weitere vorteilhafte Ausgestaltung des Systems 2 schematisch dargestellt. Das System 2 unterscheidet sich von dem System 2, wie es in den Figuren 1 und 2 dargestellt wurde, dadurch, dass das in Figur 4 dargestellte System 2 einen anderen Aktor 14 aufweist. Außerdem ist der Abstreifer 12 an einem Lager 40 drehbar und/oder verschwenkbar befestigt. Damit kann der Abstreifer 12 und insbesondere die zugehörige Spitze 34 um eine von dem Lager 40 bestimmte Drehachse verschwenkt werden. Der Aktor 14 kann einen linear verschiebbaren Stempel 42 aufweisen, dessen Ende mit dem Abstreifer 12 gekoppelt ist. Der Aktor 14 kann ausgebildet sein, den Stempel 42 relativ zum übrigen Aktorkörper linear zu verschieben. Der Aktor 14 kann beispielsweise als ein elektromechanischer Aktor mit einer Kugelumlaufspindel und einer mit dieser Kugelumlaufspindel gekoppelten Stange ausgebildet sein, die den Stempel 42 des Aktors 14 bildet. Alternativ kann der Aktor 14 als ein hydraulischer oder pneumatischer Aktor 14 mit einem hydraulisch bzw. pneumatisch angetriebenen Stempel 42 ausgebildet sein, wobei der jeweils zugehörige Stempel 42 hydraulisch bzw. pneumatisch und linear verschiebbar ist. Jede der zuvor genannten, vorteilhaften Ausgestaltungen des Aktors 14 erlaubt eine Verstellung des Abstreifers 12 durch ein Verschwenken des Abstreifers 12 um eine von dem Lager 40 gebildete Achse, sodass von dem Aktor 14 der Abstand A zwischen der Spitze 34 des Abstreifers 12 und der Außenseite 32 des Leertrums 24 verstellbar ist.

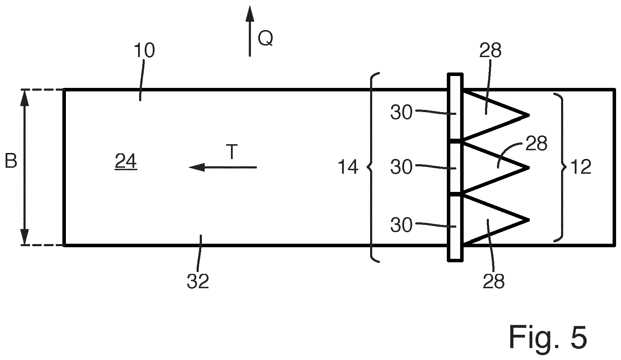

In der Figur 5 ist eine Draufsicht auf die Außenseite 32 des Leertrums 24 des Riemens 10 schematisch dargestellt. In Querrichtung Q, die senkrecht zur Transportrichtung T ist, weist der Riemen 10 eine Breite von B auf. Die Breite B des Riemens 10 kann beispielsweise mindestens 30 cm, mindestens 50 cm, mindestens 100 cm oder mindestens 150 cm betragen. Die Breite B kann auch größer als 2 m sein oder kleiner als 30 cm sein. Ist die Breite B des Riemens 10 jedoch sehr groß, hat es sich als vorteilhaft herausgestellt, wenn der Abstreifer 12 modular gebildet ist. Der Abstreifer 12 ist deshalb erfindungsgemäß durch mehrere Abstreifereinheiten 28 modular gebildet, die quer zur Transportrichtung T, also in Querrichtung Q, verteilt angeordnet sind. Jeder der Abstreifereinheiten 28 ist zum Abschaben von an dem Leertrum 24 haftenden Transportgut 4 ausgebildet. Außerdem ist es bevorzugt vorgesehen, dass in Querrichtung Q des Leertrums 24 benachbart angeordnete Abstreifeinheiten 28 unmittelbar aneinandergrenzen. Dadurch kann gewährleistet werden, dass an dem Leertrum 24 haftendes Transportgut 4 über die gesamte Breite B mittels der Abstreifereinheiten 28 bzw. mittels des modular gebildeten Abstreifers 12 von der Oberfläche 32 des Leertrums 24 abgeschabt werden kann. Jeder der Abstreifereinheiten 28 kann pflugförmig oder V-förmig ausgebildet sein. Darüber hinaus können andere Formen für jede der Abstreifereinheiten 28 möglich sein. So kann jede der Abstreifereinheiten 28 beispielsweise nach Art einer flachen Platte gebildet sein. Die Abstreifereinheiten 28 können in Querrichtung Q fluchtend hintereinander angeordnet sein.

Jeder der Abstreifereinheiten 28 kann einen Abstand zu der Oberseite 32 des Leertrums 24 aufweisen. Der Abstand des Abstreifers 12 kann sich deshalb aus dem Mittelwert der Abstände der Abstreifereinheiten 28 zu der Oberseite 32 des Leertrums 24 ergeben. Jeder der Abstreifereinheiten 28 kann mit einem zugehörigen Lager verschwenkbar befestigt sein. Jeder der Abstreifereinheiten 28 kann deshalb individuell verschwenkt werden, um den jeweiligen Abstand zwischen der Oberfläche 32 des Leertrums 24 und der jeweiligen Abstreifereinheit 28 zu verändern.

Erfindungsgemäß ist der Aktor 14 derart mit den Abstreifeinheiten 28 des modular gebildeten Abstreifers 12 gekoppelt sodass ein Abstand zwischen jeder Abstreifeinheit 28 und dem Leertrum 24, insbesondere der zugehörigen Außenseite 32, mittels des Aktors 14 individuell verstellbar ist.

Dies kann insbesondere bei einem Riemen 10 mit einer großen Breite B sinnvoll sein. Denn gerade an den Außenseiten 32 in Querrichtung Q kann der Riemen 10 im Bereich des Leertrums 24 nach unten ragen, sodass der Leertrum 24 im Querschnitt gewölbt ist. Dieser Querschnittsform kann Sorge getragen werden, indem die Abstreifeinheiten 28 individuell mittels des Aktors 14 verschwenkbar sind, sodass der Abstand zwischen jeder Abstreifeinheit 28 und der Außenseite 32 des Leertrums 24 auf einen bestimmten Wert mittels der Kontrolleinheit 18 eingestellt wird. Der Aktor 14 kann für jede Abstreifeinheit 28 eine zugehörige Aktoreinheit 30 aufweisen, die jeweils mit der zugehörigen Abstreifeinheit 28 derart gekoppelt ist, sodass der Abstand jeder Abstreifeinheit 28 von der Außenseite 32 des Leertrums 24 mittels der zugehörigen Aktoreinheit 30 verstellbar ist. Die Steuerung des Aktors 14 kann somit auch als eine Steuerung der Aktoreinheiten 30 des Aktors 14 verstanden werden. Die Kontrolleinheit 18 ist deshalb vorzugsweise derart ausgebildet, die Aktoreinheiten 30 des Aktors 14 derart zu steuern, sodass an dem Leertrum 24 des Riemens 10 haftendes Transportgut 4 bis auf eine vorbestimmte Höhe des Transportguts 4 an dem Riemen 10 von der Abstreifeinheit 28 abgeschabt wird.

### Bezugszeichenliste

- A: Abstand
- B: Breite
- Q: Querabstand
- T: Transportrichtung
- Y: Querrichtung

- 2: System
- 4: Transportgut
- 6: Umlenkrolle
- 8: Umlenkrolle
- 10: Riemen
- 12: Abstreifer
- 14: Aktor
- 16: Sensor
- 18: Kontrolleinheit
- 20: Riementrieb
- 22: Arbeitstrum
- 24: Leertrum
- 26: Antrieb
- 28: Abstreifeinheit
- 30: Aktoreinheit
- 32: Außenseite
- 34: Spitze
- 36: Sensorleitung
- 38: Steuerleitung
- 40: Drehlager
- 42: Stempel

## Patentansprüche

1. System (2) zum Transport von Transportgut (4), wobei das System (2) aufweist:
mehrere Umlenkrollen (6, 8), einen Riemen (10), einen Abstreifer (12), einen Aktor (14), einen Sensor (16) und eine Kontrolleinheit (18),
wobei der Riemen (10) die Umlenkrollen (6, 8) jeweils teilweise umschlingt, sodass ein Riementrieb (20) mit einem Arbeitstrum (22), der zum Transport von Transportgut (4) dient, und einem Leertrum (24) gebildet ist,
wobei mindestens einer der Umlenkrollen (6, 8) mit einem Antrieb (26) gekoppelt ist, um den - Riemen (10) in einer Transportrichtung T anzutreiben,
wobei der Abstreifer (12) gegenüberliegend zum Leertrum (24) angeordnet ist und dabei derart mit dem Aktor (14) gekoppelt ist, sodass ein Abstand A zwischen dem Abstreifer (12) und dem Leertrum (24) mittels des Aktors (14) verstellbar ist,
wobei der Sensor (16) derart angeordnet und ausgebildet ist, um an dem Leertrum (24) haftendes Transportgut (4) kontaktlos zu erfassen,
wobei der Sensor (16) zum Erzeugen eines Sensorsignals ausgebildet ist, das von dem Sensor (16) erfasstes Transportgut (4) repräsentiert,
wobei der Sensor (16) mit der Kontrolleinheit (18) direkt oder indirekt gekoppelt ist, um das Sensorsignal an die Kontrolleinheit (18) zu übertragen,
wobei der Aktor (14) direkt oder indirekt mit der Kontrolleinheit (18) gekoppelt ist, sodass der Aktor (14) von der Kontrolleinheit (18) steuerbar ist, und
wobei die Kontrolleinheit (18) ausgebildet ist, den Aktor (14) basierend auf dem Sensorsignal derart zu steuern, sodass an dem Leertrum (24) des Riemens (10) haftendes Transportgut (4) von dem Abstreifer (12) abgeschabt wird,
**dadurch gekennzeichnet, dass**
der Abstreifer (12) modular durch mehrere Abstreifeinheiten (28) gebildet ist, die quer zu der Transportrichtung T verteilt angeordnet sind und jeweils zum Abschaben von an dem Leertrum (24) haftenden Transportgut (4) ausgebildet sind,
wobei der Aktor (14) mit den Abstreifeinheiten (28) derart gekoppelt ist, sodass ein Abstand zwischen jeder Abstreifeinheit (28) und dem Leertrum (24) mittels des Aktors (14) individuell verstellbar ist.

2. System (2) nach dem vorhergehenden Anspruch, **dadurch gekennzeichnet, dass** der Sensor (16) derart angeordnet ist, sodass der Sensor (16) an dem Leertrum (24) haftendes Transportgut (4) in Transportrichtung T vor dem Abstreifer (12) erfasst.

3. System (2) nach einem der vorhergehenden Ansprüche, **dadurch gekennzeichnet, dass** der Sensor (16) zur Erfassung von an dem Leertrum (24) haftenden Transportgut (4) über die gesamte Breite des Leertrums (24) ausgebildet und angeordnet ist.

4. System (2) nach einem der vorhergehenden Ansprüche, **dadurch gekennzeichnet, dass** der Sensor (16) als ein optischer Sensor, als ein Ultraschallsensor oder als ein Röntgensensor ausgebildet ist.

5. System (2) nach einem der vorhergehenden Ansprüche, **dadurch gekennzeichnet, dass** die Kontrolleinheit (18) ausgebildet ist, den Abstand A des Abstreifers (12) durch Steuern des Aktors (14) und basierend auf dem Sensorsignal derart auf einen vorbestimmten Referenzabstand zu regeln, sodass an dem Leertrum (24) des Riemens (10) haftendes Transportgut (4) bis eine Abschabhöhe des Transportguts (4) auf dem Riemen (10) von dem Abstreifer (12) abgeschabt wird, wobei die Abschabhöhe durch den geregelten Abstand A des Abstreifers (12) bestimmt ist.

6. System (2) nach einem der vorhergehenden Ansprüche, **dadurch gekennzeichnet, dass** der Abstreifer (12) von der Kontrolleinheit (18) derart basierend auf dem Sensorsignal gesteuert wird, dass der Abstand A des Abstreifers (12) vom Leertrum (24) nicht weniger als ein vorbestimmter Mindestabstand beträgt.

7. System (2) nach einem der vorhergehenden Ansprüche, **dadurch gekennzeichnet, dass** die Kontrolleinheit (18) basierend auf dem Sensorsignal zur Erkennung eines zumindest im Wesentlichen sauberen Leertrums (24) ausgebildet ist, wenn an dem Leertrum (24) kein Transportgut (4) haftet oder wenn Transportgut (4) mit einer Höhe von weniger als einer vorbestimmten Maximalhöhe an dem Leertrum (24) haftet, und wobei die Kontrolleinheit (18) ausgebildet ist, den Aktor (14) derart zu steuern, sodass der Abstreifer (12) mindestens einen vorbestimmten Leerlaufabstand zu dem Leertrum (24) aufweist, wenn von der Kontrolleinheit (18) das zumindest im Wesentlichen saubere Leertrum (24) erkannt wird.

8. System (2) nach dem vorhergehenden Anspruch, **dadurch gekennzeichnet, dass** der vorbestimmte Leerlaufabstand mindestens 2 mm, mindestens 5 mm oder mindestens 10 mm beträgt.

9. System (2) nach einem der vorhergehenden Ansprüche, **dadurch gekennzeichnet, dass** in Querrichtung Q des Leertrums (24) benachbarte Abstreifeinheiten (28) unmittelbar aneinandergrenzen oder jeweils einen Querabstand von weniger als 2 cm aufweisen.

10. System (2) nach einem der vorhergehenden Ansprüche, **dadurch gekennzeichnet, dass** jede Abstreifeinheit (28) als eine pflugförmige oder V-förmige Abstreifeinheit (28) ausgebildet ist.

11. System (2) nach einem der vorhergehenden Ansprüche, **dadurch gekennzeichnet, dass** der Aktor (14) für jede Abstreifeinheit (28) eine zugehörige Aktoreinheit (30) aufweist, die jeweils mit der zugehörigen Abstreifeinheit (28) derart gekoppelt ist, sodass der Abstand jeder Abstreifeinheit (28) vom Leertrum (24) mittels der zugehörigen Aktoreinheit (30) verstellbar ist.

12. System (2) nach dem vorhergehenden Anspruch, **dadurch gekennzeichnet, dass** die Kontrolleinheit (18) ausgebildet ist, die Aktoreinheiten (30) des Aktors (14) derart zu steuern, sodass an dem Leertrum (24) des Riemens (10) haftendes Transportgut (4) bis auf eine vorbestimmte Höhe des Transportguts (4) auf dem Riemen (10) von den Abstreifeinheiten (28) abgeschabt wird.

13. System (2) nach einem der vorhergehenden Ansprüche 11 bis 12, **dadurch gekennzeichnet, dass** die Kontrolleinheit (18) ausgebildet ist, den Abstand jeder Abstreifeinheit (28) durch Steuern der Aktoreinheiten (30) und basierend auf dem Sensorsignal jeweils derart auf einen vorbestimmten Referenzabstand zu regeln, sodass an dem Leertrum (24) des Riemens (10) haftendes Transportgut (4) bis eine Abschabhöhe des Transportguts (4) auf dem Riemen (10) von den Abstreifeinheiten (28) abgeschabt wird, wobei die Abschabhöhe durch den geregelten Abstand der Abstreifeinheiten (28) bestimmt ist.

## Claims

1. System (2) for transporting transported material (4), wherein the system (2) comprises:
multiple deflection rollers (6, 8), a belt (10), a stripper (12), an actuator (14), a sensor (16), and a control unit (18),
wherein the belt (10) wraps at least partially around the deflection rollers (6, 8) in each case, so as to form a belt drive (20) with a carrying side (22), which serves for transporting transported material (4), and a return side (24),
wherein at least one of the deflection rollers (6, 8) is coupled to a drive (26), in order to drive the belt (10) in a transporting direction T,
wherein the stripper (12) is arranged opposite the return side (24) and is coupled to the actuator (14) in such a way that a distance A between the stripper (12) and the return side (24) is adjustable by means of the actuator (14),
wherein the sensor (16) is arranged and designed in such a way as to contactlessly sense transported material (4) adhering to the return side (24),
wherein the sensor (16) is designed for generating a sensor signal which represents transported material (4) sensed by the sensor (16),
wherein the sensor (16) is directly or indirectly coupled to the control unit (18) in order to transmit the sensor signal to the control unit (18),
wherein the actuator (14) is directly or indirectly coupled to the control unit (18), so that the actuator (14) can be controlled by the control unit (18), and
wherein the control unit (18) is designed to control the actuator (14) on the basis of the sensor signal in such a way that transported material (4) adhering to the return side (24) of the belt (10) is scraped off by the stripper (12),
**characterized in that**
the stripper (12) is formed modularly by multiple stripping units (28), which are arranged such that they are distributed transversely to the transporting direction T and are in each case designed for scraping off transported material (4) adhering to the return side (24),
wherein the actuator (14) is coupled to the stripping unit (28) in such a way that a distance between each stripping unit (28) and the return side (24) is individually adjustable by means of the actuator (14).

2. System (2) according to the preceding claim, **characterized in that** the sensor (16) is arranged in such a way that the sensor (16) senses transported material (4) adhering to the return side (24) upstream of the stripper (12) in the transporting direction T.

3. System (2) according to one of the preceding claims, **characterized in that** the sensor (16) is designed and arranged for sensing transporting material (4) adhering to the return side (24) over the entire width of the return side (24).

4. System (2) according to one of the preceding claims, **characterized in that** the sensor (16) is designed as an optical sensor, as an ultrasonic sensor or as an x-ray sensor.

5. System (2) according to one of the preceding claims, **characterized in that** the control unit (18) is designed to control the distance A of the stripper (12) by controlling the actuator (14) and on the basis of the sensor signal to a predetermined reference distance in such a way that transported material (4) adhering to the return side (24) of the belt (10) is scraped off by the stripper (12) to a scraping height of the transported material (4) on the belt (10), wherein the scraping height is determined by the controlled distance A of the stripper (12).

6. System (2) according to one of the preceding claims, **characterized in that** the stripper (12) is controlled by the control unit (18) on the basis of the sensor signal in such a way that the distance A of the stripper (12) from the return side (24) is not less than a predetermined minimum distance.

7. System (2) according to one of the preceding claims, **characterized in that** the control unit (18) is designed for detecting on the basis of the sensor signal an at least substantially clean return side (24) when no transported material (4) is adhering to the return side (24) or when transported material (4) is adhering to the return side (24) to a height of less than a predetermined maximum height, and wherein the control unit (18) is designed to control the actuator (14) in such a way that the stripper (12) is at at least a predetermined idling distance from the return side (24) when the at least substantially clean return side (24) is detected by the control unit (18).

8. System (2) according to the preceding claim, **characterized in that** the predetermined idling distance is at least 2 mm, at least 5 mm or at least 10 mm.

9. System (2) according to one of the preceding claims, **characterized in that** stripping units (28) that are adjacent in the transverse direction Q of the return side (24) directly adjoin one another or are in each case at a transverse distance of less than 2 cm.

10. System (2) according to one of the preceding claims, **characterized in that** each stripping unit (28) is designed as a plough-shaped or V-shaped stripping unit (28).

11. System (2) according to one of the preceding claims, **characterized in that** the actuator (14) has for each stripping unit (28) an associated actuator unit (30), which in each case is coupled to the associated stripping unit (28) in such a way that the distance of each stripping unit (28) from the return side (24) is adjustable by means of the associated actuator unit (30).

12. System (2) according to the preceding claim, **characterized in that** the control unit (18) is designed to control the actuator units (30) of the actuator (14) in such a way that transported material (4) adhering to the return side (24) of the belt (10) is scraped off by the stripping unit (28) to a predetermined height of the transported material (4) on the belt (10).

13. System (2) according to either of the preceding Claims 11 and 12, **characterized in that** the control unit (18) is designed to control the distance of each stripping unit (28) by controlling the actuator units (30) and on the basis of the sensor signal to a predetermined reference distance in each case in such a way that transported material (4) adhering to the return side (24) of the belt (10) is scraped off by the stripping units (28) to a scraping height of the transported material (4) on the belt (10), wherein the scraping height is determined by the controlled distance of the stripping units (28).

## Revendications

1. Système (2) permettant de transporter des produits à transporter (4), dans lequel le système (2) présente :
plusieurs poulies de renvoi (6, 8), une courroie (10), un racleur (12), un actionneur (14), un capteur (16) et une unité de contrôle (18),
dans lequel la courroie (10) entoure les poulies de renvoi (6, 8) respectivement en partie de sorte qu'un entraînement par courroie (20) est formé par un brin de service (22) qui sert au transport des produits à transporter (4) et par un brin vide (24),
dans lequel au moins l'une des poulies de renvoi (6, 8) est couplée à un dispositif d'entraînement (26) pour entraîner la courroie (10) dans une direction de transport T,
dans lequel le racleur (12) est disposé à l'opposé du brin vide (24) tout en étant couplé à l'actionneur (14) de telle sorte qu'une distance A entre le racleur (12) et le brin vide (24) est réglable au moyen de l'actionneur (14),
dans lequel le capteur (16) est disposé et réalisé de façon à détecter sans contact des produits à transporter (4) adhérant au brin vide (24),
dans lequel le capteur (16) est réalisé pour générer un signal de capteur qui représente des produits à transporter (4) détectés par le capteur (16),
dans lequel le capteur (16) est couplé directement ou indirectement à l'unité de contrôle (18) pour transmettre le signal de capteur à l'unité de contrôle (18),
dans lequel l'actionneur (14) est couplé directement ou indirectement à l'unité de contrôle (18) de sorte que l'actionneur (14) peut être commandé par l'unité de contrôle (18), et
dans lequel l'unité de contrôle (18) est réalisée pour commander l'actionneur (14) sur la base du signal de capteur de telle sorte que des produits à transporter (4) adhérant au brin vide (24) de la courroie (10) sont raclés par le racleur (12),
**caractérisé en ce que** le racleur (12) est formé de manière modulaire par plusieurs unités de raclage (28) qui sont réparties transversalement à la direction de transport T et sont respectivement réalisées pour gratter des produits à transporter (4) adhérant au brin vide (24),
dans lequel l'actionneur (14) est couplé aux unités de raclage (28) de telle sorte qu'une distance entre chaque unité de raclage (28) et le brin vide (24) est réglable individuellement au moyen de l'actionneur (14).

2. Système (2) selon la revendication précédente, **caractérisé en ce que** le capteur (16) est disposé de telle sorte que le capteur (16) détecte des produits à transporter (4) adhérant au brin vide (24) devant le racleur (12) dans la direction de transport T.

3. Système (2) selon l'une quelconque des revendications précédentes, **caractérisé en ce que** le capteur (16) est réalisé et disposé pour détecter des produits à transporter (4) adhérant au brin vide (24) sur toute la largeur du brin vide (24).

4. Système (2) selon l'une quelconque des revendications précédentes, **caractérisé en ce que** le capteur (16) est réalisé sous forme de capteur optique, de capteur à ultrasons ou de capteur à rayons X.

5. Système (2) selon l'une quelconque des revendications précédentes, **caractérisé en ce que** l'unité de contrôle (18) est réalisée pour réguler la distance A du racleur (12) par la commande de l'actionneur (14) et sur la base du signal de capteur de telle sorte sur une distance de référence prédéterminée de sorte que des produits à transporter (4) adhérant au brin vide (24) de la courroie sont grattés par le racleur (12) jusqu'à une hauteur de grattage des produits à transporter (4) sur la courroie (10), la hauteur de grattage étant déterminée par la distance A régulée du racleur (12).

6. Système (2) selon l'une quelconque des revendications précédentes, **caractérisé en ce que** le racleur (12) est commandé par l'unité de contrôle (18) sur la base du signal de capteur de telle sorte que la distance A du racleur (12) par rapport au brin vide (24) n'est pas inférieure à une distance minimale prédéterminée.

7. Système (2) selon l'une quelconque des revendications précédentes, **caractérisé en ce que** l'unité de contrôle (18) est réalisée pour identifier sur la base du signal de capteur un brin vide (24) au moins substantiellement propre si aucun produit à transporter (4) n'adhère au brin vide (24) ou si des produits à transporter (4) d'une hauteur inférieure à une hauteur maximale prédéterminée adhèrent au brin vide (24), et dans lequel l'unité de contrôle (18) est réalisée pour commander l'actionneur (14) de telle sorte que le racleur (12) présente au moins une distance de marche à vide prédéterminée par rapport au brin vide (24) lorsque l'unité de contrôle (18) identifie ledit brin vide (24) au moins substantiellement propre.

8. Système (2) selon la revendication précédente, **caractérisé en ce que** la distance de marche à vide mesure au moins 2 mm, au moins 5 mm ou au moins 10 mm.

9. Système (2) selon l'une quelconque des revendications précédentes, **caractérisé en ce que** dans la direction transversale Q du brin vide (24) des unités de raclage (28) voisines sont directement adjacentes ou présentent respectivement une distance transversale de moins de 2 cm.

10. Système (2) selon l'une quelconque des revendications précédentes, **caractérisé en ce que** chaque unité de raclage (28) est réalisée comme une unité de raclage (28) en forme de charrue ou en forme de V.

11. Système (2) selon l'une quelconque des revendications précédentes, **caractérisé en ce que** l'actionneur (14) présente pour chaque unité de raclage (28) une unité d'actionneur (30) associée qui est couplée respectivement à l'unité de raclage (28) associée de telle sorte que la distance de chaque unité de raclage (28) par rapport au brin vide (24) est réglable au moyen de l'unité d'actionneur associée (30).

12. Système (2) selon la revendication précédente, **caractérisé en ce que** l'unité de contrôle (18) est réalisée pour commander les unités d'actionneur (30) de l'actionneur (14) de telle sorte que des produits à transporter (4) adhérant au brin vide (24) de la courroie (10) sont grattés par les unités de raclage (28) jusqu'à une hauteur prédéterminée des produits à transporter (4) sur la courroie (10).

13. Système (2) selon l'une quelconque des revendications précédentes 11 à 12, **caractérisé en ce que** l'unité de contrôle (18) est réalisée pour régler la distance de chaque unité de raclage (28) par la commande des unités d'actionneur (30) et sur la base du signal de capteur respectivement de telle sorte sur une distance de référence prédéterminée que des produits à transporter (4) adhérant au brin vide (24) de la courroie (10) sont grattés par les unités de raclage (28) jusqu'à une hauteur de grattage des produits à transporter (4) sur la courroie (10), la hauteur de grattage étant déterminée par la distance régulée des unités de raclage (28).
